# EUROPÄISCHE PATENTSCHRIFT

(11) **EP 3 613 573 B1**
(45) Veröffentlichungstag und Bekanntmachung des Hinweises auf die Patenterteilung: **11.02.2026**
(21) Anmeldenummer: 18190477.2
(22) Anmeldetag: 23.08.2018
(51) Int. Cl.: B29D 99/00, B29C 45/14, B29C 70/46, B27N 3/04, B27N 3/06, B29C 70/74, B29C 70/78, B27N 3/16, B27N 3/18, B27N 7/00, B29C 37/00, B29C 43/20, B29C 70/16, B29C 70/18, B29C 70/20, B32B 5/02, B32B 38/00, B29L 9/00, B27N 3/12, B29C 45/26, B29C 45/33, B29C 31/08

(54) **VERKLEIDUNGSBAUTEIL ZUM VERKLEIDEN EINES INNENRAUMS EINES PERSONENTRANSPORTMITTELS SOWIE VERFAHREN ZUM HERSTELLEN EINES DERARTIGEN VERKLEIDUNGSBAUTEILS**
LINING COMPONENT FOR LINING AN INTERIOR OF A PASSENGER TRANSPORT MEANS AND METHOD FOR THE PRODUCTION OF SUCH A LINING COMPONENT
COMPOSANT D'HABILLAGE DESTINÉ À HABILLER L'ESPACE INTÉRIEUR D'UN MOYEN DE TRANSPORT DE PERSONNES AINSI QUE PROCÉDÉ DE FABRICATION D'UN TEL COMPOSANT D'HABILLAGE

(43) Veröffentlichungstag der Anmeldung: 26.02.2020
(73) Patentinhaber: Motherson Innovations Company Limited, London EC2N 2AX (GB)
(72) Erfinder: Pignard, Pierre, 68320 Jebsheim (FR); Buchet, Yann, 67000 Strasbourg (FR)
(74) Vertreter: Westphal, Mussgnug & Partner Patentanwälte mbB

(56) Entgegenhaltungen:
- EP-A1- 3 115 162
- EP-A1- 3 260 287
- EP-A2- 0 799 679
- EP-B1- 2 563 570
- DE-A1- 10 134 673
- DE-A1- 102009 006 130
- DE-A1- 102013 202 095
- DE-A1- 102014 004 880
- DE-B3- 102011 106 151

## Beschreibung

Die vorliegende Erfindung betrifft ein Verfahren zum Herstellen eines Verkleidungsbauteils zum Verkleiden eines Innenraums eines Personentransportmittels sowie ein Personentransportmittel mit einem derartigen Verkleidungsbauteil.

Das Personentransportmittel ist insbesondere als Fahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personentransportmittel wie Schiffe, Flugzeuge, Züge oder dergleichen.

In allen Ausgestaltungen des Personentransportmittels wird der Innenraum mehr oder weniger aufwendig verkleidet, um eine ansprechende Gestaltung des Innenraums bereitzustellen. Insbesondere bei Fahrzeugen spielt die Gestaltung des Innenraums eine große Rolle und ist ein wichtiges Kaufargument. Bei der Verkleidung des Innenraums werden Verkleidungsbauteile verwendet, die beispielsweise die Türen des Fahrzeugs von der Innenseite verkleiden. Die Verkleidungsbauteile können auch die Instrumententafel oder Kofferraum- oder Seitenverkleidungen bilden oder Teil hiervon sein.

Aus verschiedenen Gründen, unter anderem aus ästhetischen oder ökologischen Gründen, kann es erwünscht sein, die Sichtseite, also die Seite, die vom Innenraum des Personentransportmittels wahrnehmbar und insbesondere sicht- und fühlbar ist, mit Naturfaseroberfläche mit einer Struktur aus Naturfasern auszustatten. Allerdings weisen Naturfasern eine insbesondere gegenüber Kunstfasern und anderen für Verkleidungsbauteilen verwendeten Oberflächenstrukturen eine verminderte Beständigkeit gegenüber physikalischen, chemischen und mechanischen Einwirkungen wie UV-Strahlen, Kratzer oder Abrieb auf. Darüber hinaus sind Naturfasern üblicherweise nicht wasserabweisend, so dass der Trocknungsvorgang bei einer Durchnässung lange dauert und häufig Wasserflecken hinterlässt. Zudem kann es infolge einer Durchnässung zu einer Schimmelbildung kommen und die Oberflächeneigenschaften können sich verändern.

Die EP 2 563 570 B1 offenbart ein Verkleidungsbauteil, dessen Sichtseite mit einer Naturfaseroberfläche mit einer Struktur aus Naturfasern ausgestattet ist. Um die Naturfasern aus den oben genannten Gründen zu schützen, wird eine mehrschichtige Schutzschicht verwendet, wobei die Schutzschicht aus demselben Material besteht wie die Bindematrix für die Naturfasern. Die Schutzschicht wird aufgeheizt und mit den Naturfasern aufgeschmolzen. Dieser Herstellungsprozess ist jedoch kompliziert und aufwendig. Die optische Homogenität der Naturfaseroberfläche ist von mehreren Faktoren abhängig, unter anderem von der Materialhomogenität des Naturfaser-Verbundelements, der Homogenität der Temperaturverteilung, der lokalen Materialdichte und dem lokalen Material-Imprägniervermögen.

Weitere Verkleidungsbauteils zum Verkleiden eines Innenraums eines Personentransportmittels sind in der DE 10 2014 004 880 A1, der DE 10 2009 006 130 A1, der EP 3 260 287 A1, der DE 10 2013 202 095 A1, der EP 3 115 162 A1, der EP 0 799 679 A2, der DE 10 2011 106 151 B3 und der DE 101 34 673 A1 offenbart.

Aufgabe einer Ausführungsform der vorliegenden Erfindung ist es, ein Verfahren zum Herstellen eines Verkleidungsbauteils zum Verkleiden eines Innenraums eines Personentransportmittels anzugeben, mit welchem es mit einfachen und kostengünstigen Mitteln möglich ist, die Naturfaseroberfläche der Sichtseite eines Verkleidungsbauteils so herzustellen, dass die Naturfasern vor physikalischen, chemischen und mechanischen Einwirkungen geschützt sind.

Diese Aufgabe wird mit den in den Ansprüchen 1 und 2 angegebenen Merkmalen gelöst. Vorteilhafte Ausführungsformen sind Gegenstand der Unteransprüche.

Eine Ausführungsform betrifft ein Verkleidungsbauteil zum Verkleiden eines Innenraums eines Personentransportmittels, insbesondere eines Fahrzeugs, wobei das Verkleidungsbauteil ein gepresstes Naturfaser-Verbundelement mit zumindest einer vom Innenraum des Fahrzeugs wahrnehmbaren Sichtseite, die eine Naturfaseroberfläche mit einer Struktur aus Naturfasern bildet, und eine auf die Naturfaseroberfläche aufgetragene und die Naturfasern umgebende Lackschutzschicht umfasst, welche derart ausgebildet ist, dass die Struktur aus Naturfasern fühlbar ist.

Insbesondere im Gegensatz zu der in der EP 2 563 570 B1 offenbarten Art und Weise, die Naturfasern vor äußeren Einflüssen zu schützen, ist es möglich, eine Lackschutzschicht zu verwenden. Die Lackschutzschicht lässt sich deutlich gleichmäßiger und mit einer deutlich geringeren Schichtdicke auftragen als die mehrschichtige Schutzschicht, die beispielsweise in der EP 2 563 570 B1 verwendet wird. Das zum Schützen der Naturfasern benötigte Volumen des Lacks ist deutlich geringer als das Volumen, welches für die mehrschichtige Schutzschicht benötigt wird. Darüber hinaus bleibt der Charakter der Naturfasern in einem deutlich größeren Umfang erhalten, insbesondere in optischer und haptischer Hinsicht. Die Lackschutzschicht kann transparent ausgebildet sein, so dass die von den Naturfasern vorgegebene Farbe sichtbar bleibt. Die Lackschutzschicht kann eingefärbt werden, um die Farbe der Naturfasern zu verstärken. Damit die mehrschichtige Schutzschicht, welche in der EP 2 563 570 B1 verwendet wird, ausreichend am Naturfaser-Verbundelement haftet, muss die mehrschichtige Schutzschicht aus demselben Material wie die Naturfaser-Verbundelement sein. Eine derartige Einschränkung des Materials besteht bei der vorschlagsgemäßen Lackschutzschicht nicht. Die Gestaltungsmöglichkeiten werden hierdurch deutlich erhöht. Weiterhin lässt sich ein sehr homogenes Erscheinungsbild der Naturfaseroberfläche unter Verwendung der vorschlagsgemäßen Lackschutzschicht erzielen. Farbvariationen und Farbanpassungen lassen sich mit der vorschlagsgemäßen Lackschutzschicht einfacher durchführen als mit aus dem Stand der Technik bekannten Schutzschichten.

Nach Maßgabe einer weiteren Ausführungsform ist die Lackschutzschicht UV-beständig, abriebsfest, wasserabweisend und/oder kratzfest. Die äußeren Einwirkungen hinsichtlich der UV-Strahlen, Abrieb und Feuchtigkeit stellen die größten Belastungen für die Naturfasern dar, welchen in dieser Ausführungsform mit der entsprechend ausgestalteten Lackschutzschicht besonders wirkungsvoll entgegengewirkt werden kann.

In einer weitergebildeten Ausführungsform kann das Naturfaser-Verbundelement eine Bindematrix für die Naturfasern aus einem thermoplastischen Kunststoff wie Polypropylen (PP) oder aus einem duroplastischen Kunststoff aufweisen. Eine derartige Bindematrix findet weite Verwendung und ermöglicht es, das Verkleidungsbauteil auf einfache und kostengünstige Weise herzustellen. Naturfaser-Verbundelemente aus Polypropylen werden auch als NFPP (naturfaserverstärktes Polypropylen) bezeichnet.

Beispiele für duroplastische Kunststoffe sind Epoxid-, Polyurethan- und Acrylharz.

Bei einer weitergebildeten Ausführungsform können die Naturfasern aus Sisal, Hanf, Jute, Flachs und/oder dergleichen bestehen und in Form eines vernadelten oder nicht-vernadelten Wirrvlieses, eines Gewebes oder einer unidirektionalen Schicht hergestellt sein. Der Aufbau des Verkleidungsbauteils inklusive der Lackschutzschicht kann zwei - oder mehrschichtig sein. Das vorschlagsgemäße Verkleidungsbauteil kann in verschiedenen Variationen hergestellt werden, so dass der Innenraum des Personentransportmittels sehr unterschiedlich gestaltet werden kann, obwohl bei allen Variationen die mit der Lackschutzschicht eingekapselten Naturfasern verwendet werden.

Eine Ausbildung der Erfindung betrifft ein Verfahren zum Herstellen eines Verkleidungsbauteils nach einem der vorherigen Ausführungsformen, umfassend folgende Schritte:
- Erwärmen und Kalibrieren der Naturfaser-Verbundplatte oder der Naturfaser-Verbundmatte mittels eines Kalibrierwerkzeugs,
- Aufbringen einer Lackschutzschicht auf eine Naturfaser-Verbundplatte oder auf eine Naturfaser-Verbundmatte mittels einer Auftragsvorrichtung,
- Einlegen der kalibrierten Naturfaser-Verbundplatte oder der kalibrierten Naturfaser-Verbundmatte in ein Formwerkzeug mit einem Oberwerkzeug und einem Unterwerkzeug,
- Schließen des Formwerkzeugs durch Bewegen des Oberwerkzeugs und/oder des Unterwerkzeugs und Umformen der kalibrierten Naturfaser-Verbundplatte oder der kalibrierten Naturfaser-Verbundmatte zu einem Verkleidungsbauteil, wobei
- der Schritt des Umformens erst dann erfolgt, wenn die Lackschutzschicht auf die Naturfaser-Verbundplatte oder auf die Naturfaser-Verbundmatte aufgebracht worden ist.

Alternativ kann das Verfahren wie folgt ausgebildet sein:
- Aufbringen einer Lackschutzschicht auf eine Naturfaser-Verbundplatte oder auf eine Naturfaser-Verbundmatte mittels einer Auftragsvorrichtung,
- Erwärmen und Kalibrieren der Naturfaser-Verbundplatte oder der Naturfaser-Verbundmatte mittels eines Kalibrierwerkzeugs,
- Einlegen der kalibrierten Naturfaser-Verbundplatte oder der kalibrierten Naturfaser-Verbundmatte in ein Formwerkzeug mit einem Oberwerkzeug und einem Unterwerkzeug,
- Schließen des Formwerkzeugs durch Bewegen des Oberwerkzeugs und/oder des Unterwerkzeugs und Umformen der kalibrierten Naturfaser-Verbundplatte oder der kalibrierten Naturfaser-Verbundmatte zu einem Verkleidungsbauteil, wobei
- der Schritt des Umformens erst dann erfolgt, wenn die Lackschutzschicht auf die Naturfaser-Verbundplatte oder auf die Naturfaser-Verbundmatte aufgebracht worden ist.

Die technischen Effekte und Vorteile, die sich mit dem vorschlagsgemäßen Verfahren erreichen lassen, entsprechen denjenigen, die für das vorliegende Verkleidungsbauteil erörtert worden sind. Zusammenfassend sei darauf hingewiesen, dass es nicht notwendig ist, eine mehrschichtige Schutzschicht zu verwenden, um die Naturfasern vor äußeren Einflüssen und Einwirkungen zu schützen. Vielmehr ist es vorschlagsgemäß möglich, eine vergleichsweise dünne Lackschutzschicht zu verwenden, welche insbesondere die optischen und haptischen Eigenschaften der Naturfasern weitgehend unangetastet lässt. Zudem lässt sich die Lackschutzschicht sehr gleichmäßig auftragen, so dass ein sehr homogenes Erscheinungsbild der Naturfaseroberfläche erzeugt wird.

Um die Naturfaser-Verbundplatte oder die Naturfaser-Verbundmatte in die gewünschte Form zu bringen, wird diese zunächst kalibriert, wobei eine große Wärmemenge schnellstmöglich in die Mitte des Materials gebracht wird. Hierzu wird die Naturfaser-Verbundplatte oder die Naturfaser-Verbundmatte erwärmt und gepresst. Nach dem Kalibrieren wird die erwärmte und kalibrierte Naturfaser-Verbundplatte oder die erwärmte und kalibrierten Naturfaser-Verbundmatte mit der Lackschutzschicht versehen und in ein Formwerkzeug eingelegt, welches ein Oberwerkzeug und ein Unterwerkzeug aufweist. Durch Schließen des Formwerkzeugs wird die kalibrierte Naturfaser-Verbundplatte oder die kalibrierten Naturfaser-Verbundmatte in die gewünschte Form gebracht. Es ist aber auch möglich, die Lackschutzschicht vor dem Kalibrieren auf die Naturfaser-Verbundplatte oder Naturfaser-Verbundmatte aufzubringen.

Aufgrund der Tatsache, dass die Lackschutzschicht mit der erwärmten Naturfaser-Verbundmatte oder der erwärmten Naturfaser-Verbundplatte in Kontakt kommt, wird auch der Lack erwärmt. Hierdurch wird erreicht, dass Komponenten der Lackbasis, beispielsweise die Lösemittel oder Wasser, zumindest teilweise bereits vor dem Umformen verdunsten und folglich den Umformungsprozess nicht beeinträchtigen.

Bei einer weiteren Ausbildung ist folgender Schritt vorgesehen:
- Aufbringen der Lackschutzschicht auf die Naturfaser-Verbundplatte oder auf die Naturfaser-Verbundmatte durch Aufsprühen mittels eines Sprühapplikators.

Die Verwendung eines Sprühapplikators als Auftragsvorrichtung ist aus technischer Sicht sehr einfach umsetzbar und gewährleistet ein gleichmäßiges Auftragen der Lackschutzschicht. Zudem eignen sich Sprühapplikatoren besonders gut dazu, sehr dünne Lackschutzschichten bereitzustellen.

Eine fortentwickelte Ausbildung gibt folgenden Schritt vor:
- Aufbringen der Lackschutzschicht auf die Naturfaser-Verbundplatte oder auf die Naturfaser-Verbundmatte durch Schichttransfer mittels einer Schichttransfereinrichtung.

In dieser Ausbildung wird die Lackschutzschicht bereits fertiggestellt bevor sie auf die Naturfaser-Verbundplatte oder die Naturfaser-Verbundmatte aufgebracht wird. Hierzu eignet sich insbesondere eine entsprechend ausgestaltete Folie. Auch die Folie gestattet es, die Lackschutzschicht besonders homogen und mit einer geringen Schichtdicke auf die Naturfaser-Verbundmatte oder die Naturfaser-Verbundplatte aufzubringen. Im Gegensatz zu der Verwendung eines Sprühapplikators ist es in dieser Ausbildung nicht notwendig, eine bewegbare Vorrichtung vorzusehen, um den Sprühapplikators über die Naturfaser-Verbundmatte oder die Naturfaser-Verbundplatte zu führen. Darüber hinaus ist es nicht notwendig, den Lack so zu konfektionieren, dass er sprühfähig ist. Allerdings muss der Lack geeignet sein, eine Folie zu bilden. Die Schichttransfereinrichtung kann beispielsweise eine Anzahl von Rollen aufweisen, mit welcher die Folie auf die Naturfaser-Verbundmatte oder die Naturfaser-Verbundplatte aufgebracht wird.

Nach Maßgabe einer weiterentwickelten Ausbildung ist folgender Schritt vorgesehen:
- Aufbringen der Lackschutzschicht auf das Oberwerkzeug und/oder auf das Unterwerkzeug des Formwerkzeugs, bevor das Formwerkzeug zum Umformen der kalibrierten Naturfaser-Verbundplatte oder der kalibrierten Naturfaser-Verbundmatte zum Verkleidungsbauteil geschlossen wird.

In dieser Ausbildung wird die Lackschutzschicht auf das Oberwerkzeug und/oder das Unterwerkzeug des Formwerkzeugs aufgebracht, bevor es zum Umformen der kalibrierten und erwärmten Naturfaser-Verbundplatte oder der kalibrierten und erwärmten Naturfaser-Verbundmatte geschlossen wird. Die Lackschutzschicht befindet sich während der Herstellung ausschließlich im Formwerkzeug, so das ein Transport der Lackschutzschicht zusammen mit der erwärmten und kalibrierten Naturfaser-Verbundplatte oder der kalibrierten und erwärmten Naturfaser-Verbundmatte zum Formwerkzeug vermieden wird. Hierbei entstehende äußere Einwirkungen auf die Lackschutzschicht, beispielsweise durch Staub, werden in dieser Ausbildung vermieden oder zumindest gering gehalten, so dass die entstehende Naturfaseroberfläche besonders homogen ausgebildet werden kann.

Gemäß einer weitergebildeten Ausbildung ist folgender Schritt vorgesehen:
- Trocknen der Naturfaser-Verbundplatte oder der Naturfaser-Verbundmatte mittels einer Trocknungseinrichtung, nachdem die Lackschutzschicht aufgebracht worden ist.

Wie erwähnt, ist es zum Bereitstellen einer homogenen Naturfaseroberfläche vorteilhaft, wenn die Komponenten der Lackbasis, beispielsweise das Lösemittel oder das Wasser, bereits vor dem Umformprozess verdunsten. Zwar verdunsten diese Komponenten bereits dadurch, dass die Wärme der kalibrierten und erwärmten Naturfaser-Verbundmatte oder der kalibrierten und erwärmten Naturfaser-Verbundplatte auf die Lackschutzschicht übertragen wird. Allerdings ist die Wärme nicht immer ausreichend, um diese Komponenten vollständig zu verdunsten. Um dennoch sicher zu gehen, dass diese Komponenten der Lackschutzschicht möglichst vollständig verdunsten, wird der Schritt des Trocknens angewendet. Der Schritt des Trocknens kann durchgeführt werden, sobald die Lackschutzschicht auf die Naturfaser-Verbundmatte oder die Naturfaser-Verbundplatte aufgebracht worden ist, also je nach Ausbildung des Verfahrens auch bereits vor dem Kalibieren.

Bei einer weiteren Ausbildung ist folgender zusätzlicher Schritt vorgesehen:
- Anspritzen von Funktionselementen bei geschlossenem Formwerkzeug an das Verkleidungsbauteil.

Funktionselemente können Positionierstifte, Schweißdome und ähnliches sein, mit denen das Verkleidungsbauteil an benachbart angeordneten Anbauteilen befestigt werden kann. Diese Funktionselemente können im Formwerkzeug hergestellt werden, so dass kein zusätzlicher Herstellungsschritt notwendig ist.

Eine Ausgestaltung der Erfindung betrifft ein Personentransportmittel, insbesondere Fahrzeug, mit einem Verkleidungsbauteil insbesondere nach einem der zuvor diskutierten Ausführungsformen zum Verkleiden eines Innenraums des Personentransportmittels, wobei das Verkleidungsbauteil mit einem Verfahren nach einem der zuvor diskutierten Ausbildungen hergestellt ist. Die technischen Effekte und Vorteile, die sich mit dem vorschlagsgemäßen Personentransportmittel erreichen lassen, entsprechen denjenigen, die für das vorliegende Verkleidungsbauteil erörtert worden sind. Zusammenfassend sei darauf hingewiesen, dass es nicht notwendig ist, eine mehrschichtige Schutzschicht zu verwenden, um die Naturfasern vor äußeren Einflüssen und Einwirkungen zu schützen. Vielmehr ist es vorschlagsgemäß möglich, eine vergleichsweise dünne Lackschutzschicht zu verwenden, welche insbesondere die optischen und haptischen Eigenschaften der Naturfasern weitgehend unangetastet lässt. Zudem lässt sich die Lackschutzschicht sehr gleichmäßig auftragen, so dass ein sehr homogenes Erscheinungsbild der Naturfaseroberfläche erzeugt wird. Der Innenraum des Personentransportmittels lässt sich daher mit einer hohen Wertigkeit ausgestalten.

Beispielhafte Ausführungsformen der Erfindung werden im Folgenden unter Bezugnahme auf die beigefügten Zeichnungen näher erläutert. Es zeigen
- Figur 1A: eine prinzipielle Schnittdarstellung durch eine Ausführungsform eines Verkleidungsbauteils,
- Figur 1B: der in Figur 1A gekennzeichnete Bereich A in einer vergrößerten, nicht maßstäblichen Darstellung,
- Figur 2A - 2G: verschiedene Schritte einer ersten Ausführungsform eines erfindungsgemäßen Verfahrens zum Herstellen eines Verkleidungsbauteils,
- Figur 3A - 3G: verschiedene Schritte einer zweiten Ausführungsform des erfindungsgemäßen Verfahrens zum Herstellen eines Verkleidungsbauteils,
- Figur 4A - 4G: verschiedene Schritte einer dritten Ausführungsform des erfindungsgemäßen Verfahrens zum Herstellen eines Verkleidungsbauteils,
- Figur 5A - 5F: verschiedene Schritte einer vierten Ausführungsform des erfindungsgemäßen Verfahrens zum Herstellen eines Verkleidungsbauteils, und
- Figur 6: eine Draufsicht auf ein Personentransportmittel mit einem derartigen Verkleidungsbauteil, jeweils anhand von prinzipiellen Darstellungen.

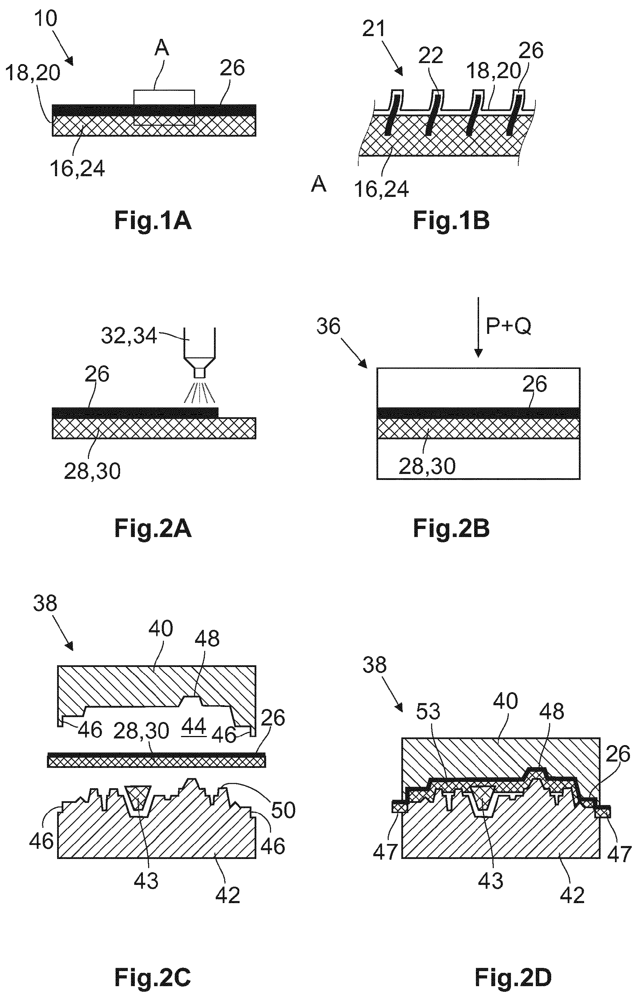

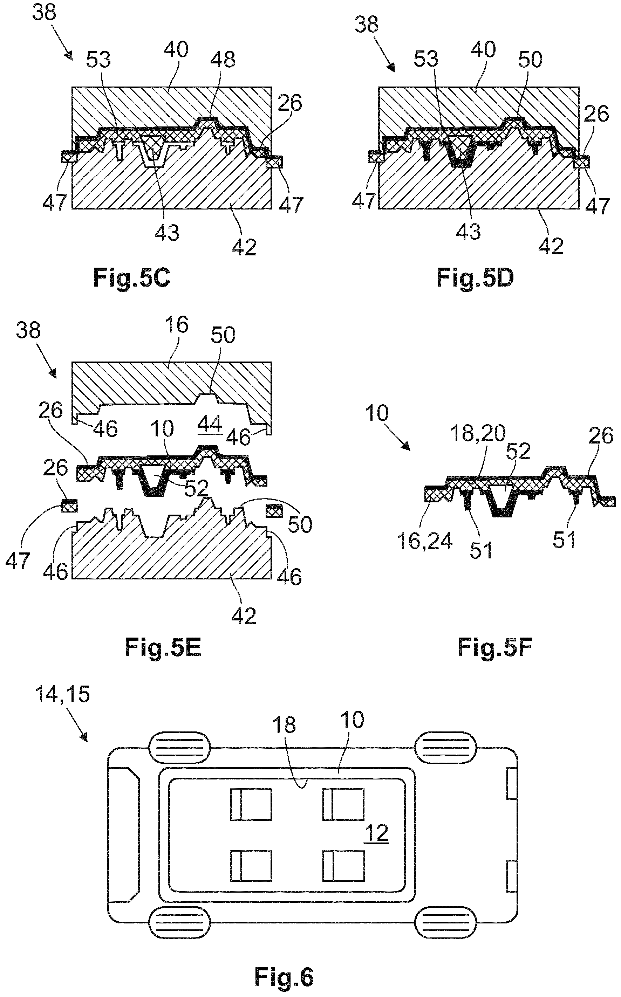

Figur 1A zeigt eine prinzipielle Schnittdarstellung durch ein Verkleidungsbauteil 10 zum Verkleiden eines Innenraums 12 eines Personentransportmittels 14, insbesondere eines Fahrzeugs 15 (siehe Figur 6). Figur 1B zeigt den in Figur 1A gekennzeichneten Bereich A in einer vergrößerten, nicht maßstäblichen Darstellung. Das Verkleidungsbauteil 10 weist ein gepresstes Naturfaser-Verbundelement 16 mit einer Sichtseite 18 auf, auf welcher eine Naturfaseroberfläche 20 angeordnet ist. Die Sichtseite 18 zeigt im eingebauten Zustand zum Innenraum 12 hin. Die Naturfaseroberfläche 20 bildet eine Struktur 21 aus Naturfasern 22, welche vom Innenraum 12 des Personentransportmittels 14 wahrnehmbar und insbesondere sichtbar und fühlbar ist.

Das Verkleidungsbauteil 10 weist eine Bindematrix 24 auf, die aus einem thermoplastischen Kunststoff wie Polypropylen (PP) besteht und in welcher die Naturfasern 22 verankert sind. Die Bindematrix 24 bildet eine Schicht des Verkleidungsbauteils 10, wobei die Struktur der Naturfasern 22 erkennbar und/oder ertastbar ist. Das Verkleidungsbauteil 10 kann nicht dargestellte weitere Schichten aufweisen, beispielsweise, um das Verkleidungsbauteil 10 zu verstärken oder designtechnisch zu dekorieren, beispielsweise mit einem Naturfasergewebe oder einem Naturfaservlies.

Wie insbesondere aus Figur 1B erkennbar, weist das vorschlagsgemäße Verkleidungsbauteil 10 eine Lackschutzschicht 26 auf, welche auf die Naturfaseroberfläche 20 aufgetragen ist und welche die Naturfasern 22 umgibt. Die Naturfasern 22 sind folglich vollumfänglich von der Lackschutzschicht 26 eingekapselt, so dass zwar die von den Naturfasern 22 gebildete Struktur 21 erhalten bleibt und für Personen fühlbar ist, die Naturfasern 22 dennoch vor äußeren Einflüssen wie UV-Strahlen und/oder mechanischen Belastungen geschützt sind.

Die Naturfasern 22 können beispielsweise aus Sisal, Hanf, Jute, Flachs und/oder dergleichen bestehen und in Form eines vernadelten oder nicht-vernadelten Wirrvlieses, eines Gewebes oder einer unidirektionalen Schicht hergestellt und in die Bindematrix 24 eingelassen sein.

Im in den Figuren 1A und 1B gezeigten Ausführungsbeispiel erstreckt sich die Naturfaseroberfläche 20 über die gesamte Sichtseite 18. Es ist aber auch möglich, Bereiche der Sichtseite 18 von der Naturfaseroberfläche 20 auszunehmen, beispielsweise dann, wenn dort ein hier nicht dargestelltes Dekorelement angeordnet werden soll.

In den Figuren 2A bis 2G ist ein erstes Ausführungsbeispiel eines erfindungsgemäßen Verfahrens zum Herstellen eines Verkleidungsbauteils 10, beispielsweise wie in Figur 1A und 1B gezeigt, dargestellt. Das Ausgangsmaterial des Verkleidungsbauteils 10 wird von einer Naturfaser-Verbundplatte 28 oder einer Naturfaser-Verbundmatte 30 gebildet. Auf diese Naturfaser-Verbundplatte 28 oder die Naturfaser-Verbundmatte 30 wird, wie in Figur 2A gezeigt, die Lackschutzschicht 26 mittels einer Auftragsvorrichtung 32, in diesem Fall mittels eines Sprühapplikators 34, auf die spätere Sichtseite 18 des Verkleidungsbauteils 10 aufgetragen. Sobald die spätere Sichtseite 18 komplett mit der Lackschutzschicht 26 versehen wurde, wird die Naturfaser-Verbundplatte 28 oder die Naturfaser-Verbundmatte 30 mittels eines Kalibrierwerkzeugs 36 kalibriert (siehe Figur 2B). Beim Kalibrieren wird die Naturfaser-Verbundplatte 28 oder die Naturfaser-Verbundmatte 30 mit dem Druck P beaufschlagt. Gleichzeitig wird die Naturfaser-Verbundmatte 30 oder die Naturfaser-Verbundplatte 28 mit der Wärme Q erwärmt. Aufgrund der Erwärmung verdunstet zumindest ein Teil der Lackbasis der Lackschutzschicht 26, insbesondere Lösemittel oder Wasser.

Anschließend wird die mit der Lackschutzschicht 26 versehene kalibrierte Naturfaser-Verbundplatte 28 oder die mit der Lackschutzschicht 26 versehene kalibrierte Naturfaser-Verbundmatte 30 in ein Formwerkzeug 38 eingelegt, welches ein Oberwerkzeug 40 und ein Unterwerkzeug 42 aufweist. Das Oberwerkzeug 40 und das Unterwerkzeug 42 können aufeinander zu und voneinander weg bewegt werden. Wie aus Figur 2C zu erkennen, geben im geöffneten Zustand das Oberwerkzeug 40 und das Unterwerkzeug 42 einen Zwischenraum 44 frei, der so bemessen ist, dass die kalibrierte Naturfaser-Verbundplatte 28 oder die kalibrierte Naturfaser-Verbundmatte 30 in das Formwerkzeug 38 eingelegt werden kann.

Das Oberwerkzeug 40 und das Unterwerkzeug 42 weisen jeweils Beschnittkanten 46 auf. Die kalibrierte Naturfaser-Verbundplatte 28 oder die kalibrierte Naturfaser-Verbundmatte 30 ist im Ausgangszustand so bemessen, dass es nach außen über die Beschnittkanten 46 übersteht, wenn es in das Formwerkzeug 38 eingelegt ist.

Nachdem die kalibrierte Naturfaser-Verbundplatte 28 oder die kalibrierte Naturfaser-Verbundmatte 30 in das geöffnete Formwerkzeug 38 eingelegt worden ist, wird das Formwerkzeug 38 geschlossen, wie in Figur 2D dargestellt. Hierzu werden das Oberwerkzeug 40 und das Unterwerkzeug 42 aufeinander zu bewegt. Das Schließen des Formwerkzeugs 38 bewirkt, dass die kalibrierte Naturfaser-Verbundplatte 28 oder die kalibrierte Naturfaser-Verbundmatte 30 zunächst zu einer umgeformten Matte bzw. Platte 53 umgeformt wird. Dabei wirken die Beschnittkanten 46 so zusammen, dass sie beim Schließen Randstücke 47 von der kalibrierten Naturfaser-Verbundplatte 28 oder von der kalibrierten Naturfaser-Verbundmatte 30 abtrennen.

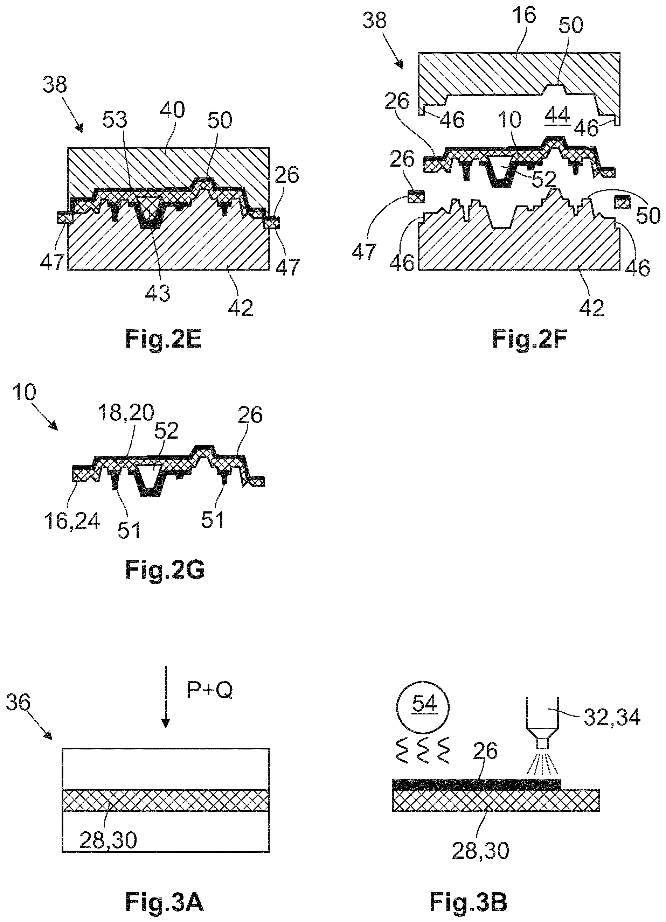

Das Oberwerkzeug 40 und das Unterwerkzeug 42 weisen Aussparungen 48 und Erhebungen 50 auf. Weiterhin weist das Formwerkzeug 38 Kerne oder Schieber 43 auf. Die kalibrierte Naturfaser-Verbundplatte 28 oder die kalibrierte Naturfaser-Verbundmatte 30 passt sich dem Verlauf der Aussparungen 48 und Erhebungen 50 an, soweit die Aussparungen 48 so ausgestaltet sind, dass sie beim Schließen des Formwerkzeugs 38 in Kontakt mit der kalibrierten Naturfaser-Verbundplatte 28 oder der kalibrierten Naturfaser-Verbundmatte 30 kommen. Einige der Aussparungen 48 des Unterwerkzeugs 42 sind so ausgestaltet, dass sie bei geschlossenem Formwerkzeug 38 eine Kavität bilden. Der Schieber 43 kann in diese Kavität eingebracht werden. Beim in Figur 2E dargestellten Schritt werden die Kavitäten mit einem Spritzgussmaterial gefüllt, wodurch Funktionselemente 51 wie Positionierungs- und/oder Befestigungsabschnitte oder Rippen an die in Bezug auf die Figuren 2A bis 2G untere Seite der verformten Matte oder verformten Platte 53 angespritzt oder hinterspritzt werden. Nachdem die Funktionselemente 51 fertiggestellt sind, entsteht ein Verkleidungsbauteil 10.

Wie in Figur 2F gezeigt, wird das Formwerkzeug 38 anschließend geöffnet und der Schieber 43 zurückgezogen. Das Verkleidungsbauteil 10 kann nun aus dem Formwerkzeug 38 entnommen werden. Die Randstücke 47 werden entsorgt oder wiederverwertet. In Figur 2G ist das Verkleidungsbauteil 10 mit den angespritzten Funktionselementen 51 dargestellt. Dort, wo der Schieber 43 angeordnet war, weist das betreffende Funktionselement 51 einen hohlen Bereich 52 auf.

Ein Vorteil, die Lackschutzschicht 26 vor dem Formpressen aufzubringen, liegt darin, die sich durch Feuchtigkeit aufstellenden Naturfasern 22 wieder flach zu drücken, um somit eine ebene Oberfläche zu erhalten. Dieser Vorteil gilt auch für die im Folgenden vorgestellten Ausführungsbeispiele des erfindungsgemäßen Verfahrens.

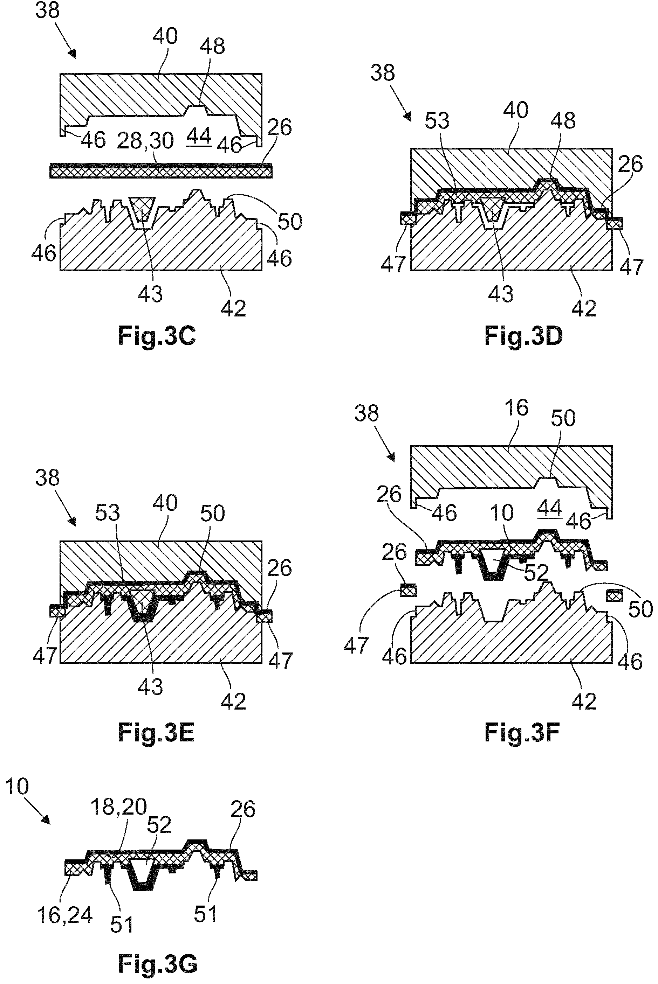

In den Figuren 3A bis 3G ist ein zweites Ausführungsbeispiel des erfindungsgemäßen Verfahrens anhand von prinzipiellen Darstellung gezeigt. Das zweite Ausführungsbeispiel des erfindungsgemäßen Verfahrens gleicht weitgehend dem ersten Ausführungsbeispiel des erfindungsgemäßen Verfahrens, allerdings wird die Naturfaser-Verbundplatte 28 oder die Naturfaser-Verbundmatte 30 zunächst auf die oben beschriebene Weise kalibriert, bevor die Lackschutzschicht 26 aufgetragen wird, was wiederum mit einem Sprühapplikator 34 geschieht (siehe Figuren 3A und 3B). Wie eingangs erwähnt, wird die Naturfaser-Verbundmatte 30 oder die Naturfaser-Verbundplatte 28 beim Kalibrieren erwärmt, so dass die Lackbasis zumindest teilweise verdunstet. Um zu gewährleisten, dass die Lackbasis vollständig oder nahezu vollständig verdunstet, weist das Verfahren nach dem zweiten Ausführungsbeispiel den Schritt des Trocknens der in diesem Fall bereits kalibrierten und erwärmten Naturfaser-Verbundplatte 28 oder der erwärmten und kalibrierten Naturfaser-Verbundplatte 28 mittels einer Trocknungseinrichtung 54, beispielsweise mittels eines Heißluftgebläses, auf. Der Schritt des Trocknens kann auch bereits vor dem Kalibrieren durchgeführt werden, nachdem die Lackschutzschicht 26 aufgetragen worden ist. Die übrigen Schritte gleichen denjenigen, die für das erste Ausführungsbeispiel des erfindungsgemäßen Verfahrens erörtert worden sind.

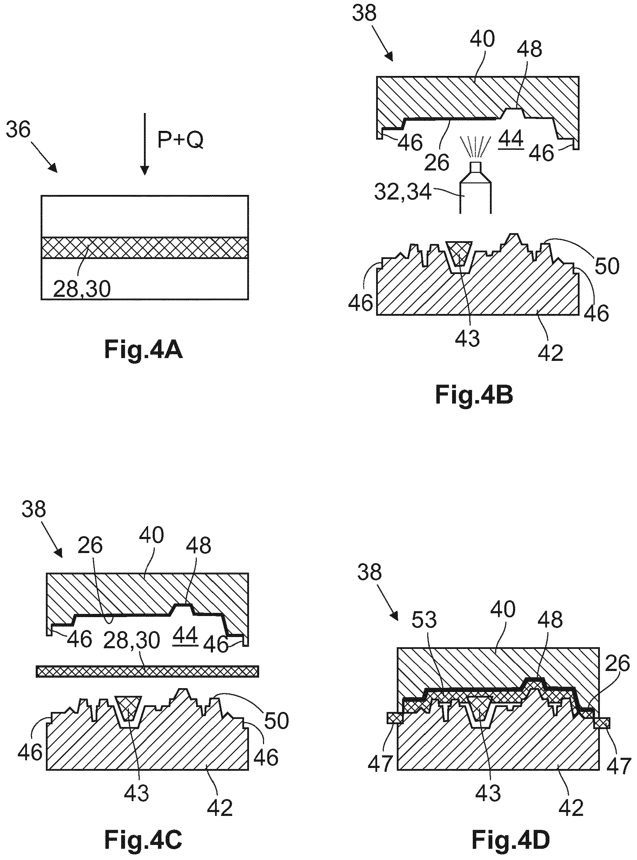

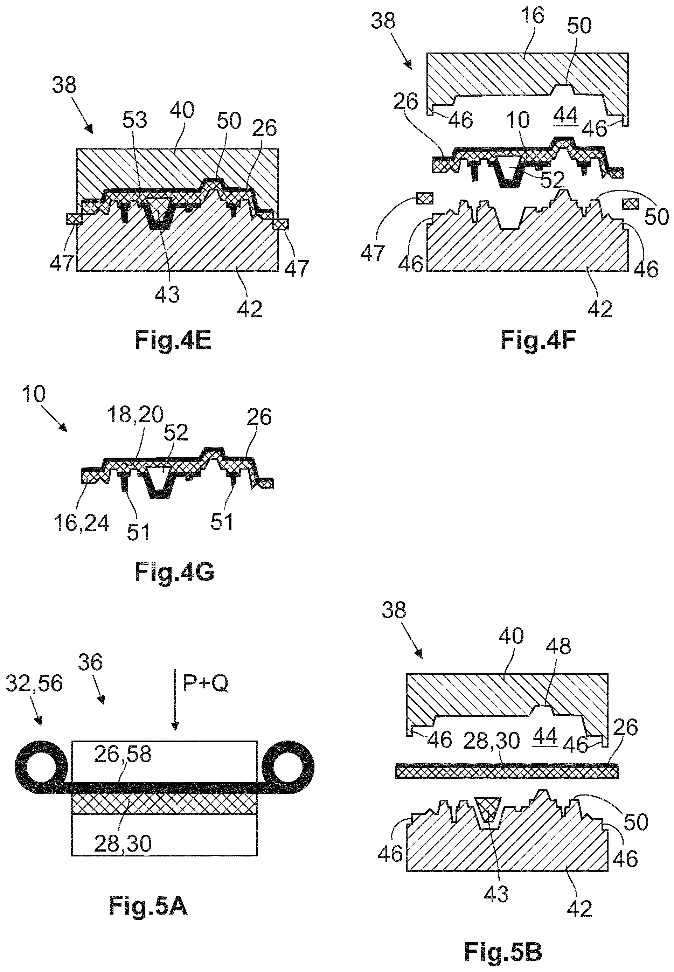

In den Figuren 4A bis 4G ist ein drittes Ausführungsbeispiel des erfindungsgemäßen Verfahrens zum Herstellen des Verkleidungsbauteils 10 wiederum anhand von prinzipiellen Darstellungen gezeigt. Der wesentliche Unterschied zum Verfahren nach dem ersten und dem zweiten Ausführungsbeispiel liegt darin, dass die Lackschutzschicht 26 unter Verwendung des bereits erwähnten Sprühapplikators 34 in diesem Fall auf das Oberwerkzeug 40 des Formwerkzeugs 38 aufgebracht wird (Figur 4B). Das Oberwerkzeug 40 formt in diesem Fall die spätere Sichtseite 18 des Verkleidungsbauteils 10. Die kalibrierte Naturfaser-Verbundmatte 30 oder die kalibrierte Naturfaser-Verbundplatte 28 (Figur 4A) wird in das Formwerkzeug 38 eingelegt, nachdem das Oberwerkzeug 40 mit der Lackschutzschicht 26 versehen worden ist (siehe Figur 4C). Die übrigen Schritte, welche in den Figuren 4D bis 4G dargestellt sind, entsprechen den Schritten des Verfahrens nach dem ersten und dem zweiten Ausführungsbeispiel. Zu erwähnen ist, dass es beim Verfahren nach dem dritten Ausführungsbeispiel möglich ist, die Lackschutzschicht 26 so aufzutragen, dass sie sich nicht auf die beim Schließen des Formwerkzeugs 38 entstehenden Randstücke 47 erstreckt. Die vom Verkleidungsbauteil 10 getrennten Randstücke 47 können einfacher entsorgt werden. Zudem kann die Menge des benötigten Lacks auf das benötigte Maß reduziert werden.

In den Figuren 5A bis 5F ist ein viertes Ausführungsbeispiel des erfindungsgemäßen Verfahrens ebenfalls anhand von prinzipiellen Zeichnungen dargestellt. In diesem Fall wird die Lackschutzschicht 26 nicht mittels eines Sprühapplikators 34 auf die spätere Sichtseite 18 des Verkleidungsbauteils 10 aufgebracht, sondern mittels einer Schichttransfereinrichtung 56, die in diesem Fall die Auftragsvorrichtung 32 bildet. Die Lackschutzschicht 26 liegt als eine zusammenhängende Folie 58 vor, welche mit der Schichttransfereinrichtung 56 auf die Naturfaser-Verbundmatte 30 oder die Naturfaser-Verbundplatte 28 aufgebracht wird. Wie aus Figur 5A hervorgeht, kann die Schichttransfereinrichtung 56 in das Kalibrierwerkzeugs 36 integriert werden, so dass die Schritte des Aufbringens der Lackschutzschicht 26 und der Kalibrierung am selben Ort und nahezu zur selben Zeit vorgenommen werden können. Die kalibrierte Naturfaser-Verbundmatte 30 oder die kalibrierte Naturfaser-Verbundplatte 28 wird nun in das geöffnete Formwerkzeug 38 eingeführt, wie es in Figur 5B dargestellt ist. Die folgenden Schritte entsprechen denjenigen, die für die übrigen Ausführungsbeispiele des erfindungsgemäßen Verfahrens dargestellt worden sind.

In Figur 6 ist ein Personentransportmittel 14 dargestellt, welches als ein Fahrzeug 15 ausgestaltet ist. Das Fahrzeug 15 weist einen Innenraum 12 auf, welcher mit einem erfindungsgemäßen Verkleidungsbauteil 10 verkleidet ist. Die Sichtseite 18 des Verkleidungsbauteils 10 weist dabei zum Innenraum 12 hin.

### Bezugszeichenliste

- 10: Verkleidungsbauteil
- 12: Innenraum
- 14: Personentransportmittel
- 15: Fahrzeug
- 16: Naturfaser-Verbundelement
- 18: Sichtseite

- 20: Naturfaseroberfläche
- 21: Struktur
- 22: Naturfaser
- 24: Bindematrix
- 26: Lackschutzschicht
- 28: Naturfaser-Verbundplatte

- 30: Naturfaser-Verbundmatte
- 32: Auftragsvorrichtung
- 34: Sprühapplikatoren
- 36: Kalibrierwerkzeug
- 38: Formwerkzeug

- 40: Oberwerkzeug
- 42: Unterwerkzeug
- 43: Kern, Schieber
- 44: Zwischenraum
- 46: Beschnittkanten
- 47: Randstück
- 48: Aussparung

- 50: Erhebung
- 51: Funktionselement
- 52: hohler Bereich
- 53: verformte Matte oder verformte Platte
- 54: Trocknungseinrichtung
- 56: Schichttransfereinrichtung
- 58: Folie

- A: Ausschnitt
- P: Druck
- Q: Wärme

## Patentansprüche

1. Verfahren zum Herstellen eines Verkleidungsbauteils (10) zum Verkleiden eines Innenraums (12) eines Personentransportmittels (14), insbesondere eines Fahrzeugs (15), wobei das Verkleidungsbauteil (10)
- ein gepresstes Naturfaser-Verbundelement (16) mit zumindest einer vom Innenraum (12) des Personentransportmittels (14) wahrnehmbaren Sichtseite (18), die eine Naturfaseroberfläche (20) mit einer Struktur (21) aus Naturfasern (22) bildet, und
eine auf die Naturfaseroberfläche (20) aufgetragene und die Naturfasern (22) umgebende Lackschutzschicht (26) umfasst, welche derart ausgebildet ist, dass die Struktur (21) aus Naturfasern (22) fühlbar ist,
umfassend folgende Schritte:
- Erwärmen und Kalibrieren der Naturfaser-Verbundplatte (28) oder der Naturfaser-Verbundmatte (30) mittels eines Kalibrierwerkzeugs (36),
- Aufbringen einer Lackschutzschicht (26) auf eine Naturfaser-Verbundplatte (28) oder auf eine Naturfaser-Verbundmatte (30) mittels einer Auftragsvorrichtung (32), wobei der Lack bei Kontakt mit der erwärmten Naturfaser-Verbundmatte (30) oder der erwärmten Naturfaser-Verbundplatte (28) erwärmt wird und dadurch Komponenten der Lackbasis zumindest teilweise bereits vor dem Umformen verdunsten,
- Einlegen der erwärmten und kalibrierten Naturfaser-Verbundplatte (28) oder der erwärmten und kalibrierten Naturfaser-Verbundmatte (30) in ein Formwerkzeug (38) mit einem Oberwerkzeug (40) und einem Unterwerkzeug (42),
- Schließen des Formwerkzeugs (38) durch Bewegen des Oberwerkzeugs (40) und/oder des Unterwerkzeugs (42) und Umformen der erwärmten und kalibrierten Naturfaser-Verbundplatte (28) oder der erwärmten und kalibrierten Naturfaser-Verbundmatte (30) zu einem Verkleidungsbauteil (10), wobei
- der Schritt des Umformens erst dann erfolgt, wenn die Lackschutzschicht (26) auf die Naturfaser-Verbundplatte (28) oder auf die Naturfaser-Verbundmatte (30) aufgebracht worden ist.

2. Verfahren zum Herstellen eines Verkleidungsbauteils (10)
zum Verkleiden eines Innenraums (12) eines Personentransportmittels (14), insbesondere eines Fahrzeugs (15), wobei das Verkleidungsbauteil (10) ein gepresstes Naturfaser-Verbundelement (16) mit zumindest einer vom Innenraum (12) des Personentransportmittels (14) wahrnehmbaren Sichtseite (18), die eine Naturfaseroberfläche (20) mit einer Struktur (21) aus Naturfasern (22) bildet, und
eine auf die Naturfaseroberfläche (20) aufgetragene und die Naturfasern (22) umgebende Lackschutzschicht (26) umfasst, welche derart ausgebildet ist, dass die Struktur (21) aus Naturfasern (22) fühlbar ist,
umfassend folgende Schritte:
- Aufbringen einer Lackschutzschicht (26) auf eine Naturfaser-Verbundplatte (28) oder auf eine Naturfaser-Verbundmatte (30) mittels einer Auftragsvorrichtung (32),
- Erwärmen und Kalibrieren der Naturfaser-Verbundplatte (28) oder der Naturfaser-Verbundmatte (30) mittels eines Kalibrierwerkzeugs (36), wobei der Lack bei Kontakt mit der erwärmten Naturfaser-Verbundmatte (30) oder der erwärmten Naturfaser-Verbundplatte (28) erwärmt wird und dadurch Komponenten der Lackbasis zumindest teilweise bereits vor dem Umformen verdunsten,
- Einlegen der erwärmten und kalibrierten Naturfaser-Verbundplatte (28) oder der erwärmten und kalibrierten Naturfaser-Verbundmatte (30) in ein Formwerkzeug (38) mit einem Oberwerkzeug (40) und einem Unterwerkzeug (42),
- Schließen des Formwerkzeugs (38) durch Bewegen des Oberwerkzeugs (40) und/oder des Unterwerkzeugs (42) und Umformen der erwärmten und kalibrierten Naturfaser-Verbundplatte (28) oder der erwärmten und kalibrierten Naturfaser-Verbundmatte (30) zu einem Verkleidungsbauteil (10), wobei
- der Schritt des Umformens erst dann erfolgt, wenn die Lackschutzschicht (26) auf die Naturfaser-Verbundplatte (28) oder auf die Naturfaser-Verbundmatte (30) aufgebracht worden ist.

3. Verfahren nach einem der Ansprüche 1 oder 2, **gekennzeichnet durch** folgenden Schritt:
- Aufbringen der Lackschutzschicht (26) auf die Naturfaser-Verbundplatte (28) oder auf die Naturfaser-Verbundmatte (30) durch Aufsprühen mittels eines Sprühapplikators (34).

4. Verfahren nach einem der Ansprüche 1 oder 2, **gekennzeichnet durch** folgenden Schritt:
- Aufbringen der Lackschutzschicht (26) auf die Naturfaser-Verbundplatte (28) oder auf die Naturfaser-Verbundmatte (30) durch Schichttransfer mittels einer Schichttransfereinrichtung (56).

5. Verfahren nach einem der Ansprüche 1 bis 4, **gekennzeichnet durch** folgenden Schritt:
- Aufbringen der Lackschutzschicht (26) auf das Oberwerkzeug (40) und/oder auf das Unterwerkzeug (42) des Formwerkzeugs (38), bevor das Formwerkzeug (38) zum Umformen der kalibrierten und erwärmten Naturfaser-Verbundplatte (28) oder der kalibrierten und erwärmten Naturfaser-Verbundmatte (30) zum Verkleidungsbauteil (10) geschlossen wird.

6. Verfahren nach einem der Ansprüche 1 bis 5, **gekennzeichnet durch** folgenden Schritt:
- Trocknen der Naturfaser-Verbundplatte (28) oder der Naturfaser-Verbundmatte (30) mittels einer Trocknungseinrichtung (54), nachdem die Lackschutzschicht (26) aufgebracht worden ist.

7. Verfahren nach einem der Ansprüche 1 bis 6, **gekennzeichnet durch** folgenden Schritt:
- Anspritzen von Funktionselementen (34) bei geschlossenem Formwerkzeug (38) an das Verkleidungsbauteil (10).

8. Personentransportmittel, insbesondere Fahrzeug (15), mit einem Verkleidungsbauteil (10) zum Verkleiden eines Innenraums (12) des Personentransportmittels (14), wobei das Verkleidungsbauteil (10) mit einem Verfahren nach einem der Ansprüche 1 bis 7 hergestellt ist.

9. Verkleidungsbauteil hergestellt mit einem Verfahren nach einem der Ansprüche 1 bis 7,
**dadurch gekennzeichnet, dass** die Lackschutzschicht (26) UV-beständig, abriebsfest, wasserabweisend und/oder kratzfest ist.

10. Verkleidungsbauteil nach Anspruch 9,
**dadurch gekennzeichnet, dass** das Naturfaser-Verbundelement (16) eine Bindematrix (24) für die Naturfasern (22) aus einem thermoplastischen Kunststoff wie Polypropylen (PP) oder aus einem duroplastischen Kunststoff aufweist.

11. Verkleidungsbauteil nach einem der Ansprüche 9 bis 10, **dadurch gekennzeichnet, dass** die Naturfasern (22) aus Sisal, Hanf, Jute, Flachs und/oder dergleichen bestehen und in Form eines vernadelten oder nicht-vernadelten Wirrvlieses, eines Gewebes oder einer unidirektionalen Schicht hergestellt sind.

## Claims

1. Method for manufacturing a trim component (10) for lining an interior space (12) of a passenger transport means (14), in particular of a vehicle (15), wherein the trim component (10) comprises
- a pressed natural fiber composite element (16) with at least one visible side (18) perceptible from the interior space (12) of the passenger transport means (14), which forms a natural fiber surface (20) with a structure (21) of natural fibers (22), and a paint protection layer (26) applied to the natural fiber surface (20) and surrounding the natural fibers (22), which is designed such that the structure (21) of natural fibers (22) is tactilely perceptible, comprising the following steps:
- heating and calibrating the natural fiber composite board (28) or the natural fiber composite mat (30) by means of a calibration tool (36),
- applying a paint protection layer (26) to a natural fiber composite board (28) or to a natural fiber composite mat (30) by means of an application device (32), wherein the paint is heated upon contact with the heated natural fiber composite mat (30) or the heated natural fiber composite board (28), and as a result, components of the paint base at least partially evaporate already before forming,
- placing the heated and calibrated natural fiber composite board (28) or the heated and calibrated natural fiber composite mat (30) into a forming tool (38) having an upper tool (40) and a lower tool (42),
- closing the forming tool (38) by moving the upper tool (40) and/or the lower tool (42) and forming the heated and calibrated natural fiber composite board (28) or the heated and calibrated natural fiber composite mat (30) into a trim component (10), wherein
- the forming step is carried out only after the paint protection layer (26) has been applied to the natural fiber composite board (28) or to the natural fiber composite mat (30).

2. Method for manufacturing a trim component (10) for lining an interior space (12) of a passenger transport means (14), in particular of a vehicle (15), wherein the trim component (10) comprises a pressed natural fiber composite element (16) with at least one visible side (18) perceptible from the interior space (12) of the passenger transport means (14), which forms a natural fiber surface (20) with a structure (21) of natural fibers (22), and comprises a paint protection layer (26) applied to the natural fiber surface (20) and surrounding the natural fibers (22), which is designed such that the structure (21) of natural fibers (22) is tactilely perceptible, comprising the following steps:
- applying a paint protection layer (26) to a natural fiber composite board (28) or to a natural fiber composite mat (30) by means of an application device (32),
- heating and calibrating the natural fiber composite board (28) or the natural fiber composite mat (30) by means of a calibration tool (36), wherein the paint is heated upon contact with the heated natural fiber composite mat (30) or the heated natural fiber composite board (28), and as a result, components of the paint base at least partially evaporate already before forming,
- placing the heated and calibrated natural fiber composite board (28) or the heated and calibrated natural fiber composite mat (30) into a forming tool (38) having an upper tool (40) and a lower tool (42),
- closing the forming tool (38) by moving the upper tool (40) and/or the lower tool (42) and forming the heated and calibrated natural fiber composite board (28) or the heated and calibrated natural fiber composite mat (30) into a trim component (10), wherein
- the forming step is carried out only after the paint protection layer (26) has been applied to the natural fiber composite board (28) or to the natural fiber composite mat (30).

3. Method according to one of claims 1 or 2, **characterized by** the following step:
- applying the paint protection layer (26) to the natural fiber composite board (28) or to the natural fiber composite mat (30) by spraying by means of a spray applicator (34).

4. Method according to one of claims 1 or 2, **characterized by** the following step:
- applying the paint protection layer (26) to the natural fiber composite board (28) or to the natural fiber composite mat (30) by layer transfer by means of a layer transfer device (56).

5. Method according to one of claims 1 to 4, **characterized by** the following step:
- applying the paint protection layer (26) to the upper tool (40) and/or to the lower tool (42) of the forming tool (38) before the forming tool (38) is closed for forming the calibrated and heated natural fiber composite board (28) or the calibrated and heated natural fiber composite mat (30) into the trim component (10).

6. Method according to one of claims 1 to 5, **characterized by** the following step:
- drying the natural fiber composite board (28) or the natural fiber composite mat (30) by means of a drying device (54) after the paint protection layer (26) has been applied.

7. Method according to one of claims 1 to 6, **characterized by** the following step:
- injection molding functional elements (34) onto the trim component (10) with the forming tool (38) closed.

8. Passenger transport means, in particular a vehicle (15), having a trim component (10) for lining an interior space (12) of the passenger transport means (14), wherein the trim component (10) is manufactured by a method according to one of claims 1 to 7.

9. Trim component manufactured by a method according to one of claims 1 to 7,
**characterized in that** the paint protection layer (26) is UV-resistant, abrasion-resistant, water-repellent, and/or scratch-resistant.

10. Trim component according to claim 9,
**characterized in that** the natural fiber composite element (16) has a binder matrix (24) for the natural fibers (22) made of a thermoplastic material such as polypropylene (PP) or of a thermosetting plastic.

11. Trim component according to one of claims 9 to 10,
**characterized in that** the natural fibers (22) are made of sisal, hemp, jute, flax, and/or the like and are produced in the form of a needled or non-needled random fiber mat, a fabric, or a unidirectional layer.

## Revendications

1. Procédé de fabrication d'un composant (10) d'habillage pour l'habillage d'un habitacle (12) d'un moyen (14) de transport des personnes, en particulier d'un véhicule (15), dans lequel le composant (10) d'habillage comprend
- un élément (16) composite pressé en fibres naturelles ayant au moins une face (18) visible, qui est perceptible de l'habitacle (12) du moyen (14) de transport des personnes et qui forme une surface (20) de fibres naturelles ayant une structure (21) en fibres (22) naturelles, et
une couche (26) de protection en vernis, qui est déposée sur la surface (20) en fibres naturelles, qui entoure les fibres (22) naturelles et qui est constituée de manière à ce que la structure (21) en fibres (22) naturelles soit sensible au toucher,
comprenant les stades suivants :
- chauffage et calibrage de la plaque (28) composite en fibres naturelles ou de la nappe (30) composite en fibres naturelles au moyen d'un outil (36) de calibrage,
- dépôt d'une couche (26) de protection en vernis sur une plaque (28) composite en fibres naturelles ou sur une nappe (30) composite en fibres naturelles au moyen d'un dispositif (32) de dépôt, dans lequel on chauffe le vernis par contact avec la nappe (30) composite en fibres naturelles chauffée ou la plaque (28) composite en fibres naturelles chauffée et ainsi des constituants de base du vernis s'évaporent au moins en partie, déjà avant le formage,
- insertion de la plaque (28) composite en fibres naturelles chauffée et calibrée ou de la nappe (30) composite en fibres naturelles chauffée et calibrée dans un outil (38) de formage ayant un outil (40) supérieur et un outil (42) inférieur,
- fermeture de l'outil (38) de formage par déplacement de l'outil (40) supérieur et/ou de l'outil (42) inférieur et formage de la plaque (28) composite en fibres naturelles chauffée et calibrée ou de la nappe (30) composite en fibres naturelles chauffée et calibrée en un composant (10) d'habillage, dans lequel
- on n'effectue le stade de formage que lorsque la couche (26) de protection en vernis a été déposée sur la plaque (28) composite en fibres naturelles ou sur la nappe (30) composite en fibres naturelles.

2. Procédé de fabrication d'un composant (10) d'habillage pour l'habillage d'un habitacle (12) d'un moyen (14) de transport des personnes, en particulier d'un véhicule (15), dans lequel le composant (10) d'habillage comprend un élément (16) composite pressé en fibres naturelles ayant au moins une face (18) visible, qui est perceptible de l'habitacle (12) du moyen (14) de transport des personnes et qui forme une surface (20) de fibres naturelles ayant une structure (21) en fibres (22) naturelles, et
une couche (26) de protection en vernis qui est déposée sur la surface (20) en fibres naturelles, qui entoure les fibres (22) naturelles et qui est constituée de manière à ce que la structure (21) en fibres (22) naturelles soit sensible au toucher,
comprenant les stades suivants :
- dépôt d'une couche (26) de protection en vernis sur une plaque (28) composite en fibres naturelles ou sur une nappe (30) composite en fibres naturelles au moyen d'un dispositif (32) de dépôt,
- chauffage et calibrage de la plaque (28) composite en fibres naturelles ou de la nappe (30) composite en fibres naturelles au moyen d'un outil (36) de calibrage, dans lequel on chauffe le vernis par contact avec la nappe (30) composite en fibres naturelles chauffée ou la plaque (28) composite en fibres naturelles chauffée et ainsi des constituants de base du vernis s'évaporent au moins en partie, déjà avant le formage,
- insertion de la plaque (28) composite en fibres naturelles chauffée et calibrée ou de la nappe (30) composite en fibres naturelles chauffée et calibrée dans un outil (38) de formage ayant un outil (40) supérieur et un outil (42) inférieur,
- fermeture de l'outil (38) de formage par déplacement de l'outil (40) supérieur et/ou de l'outil (42) inférieur et formage de la plaque (28) composite en fibres naturelles chauffée et calibrée ou de la nappe (30) composite en fibres naturelles chauffée et calibrée en un composant (10) d'habillage, dans lequel
- on n'effectue le stade de formage que lorsque la couche (26) de protection en vernis a été déposée sur la plaque (28) composite en fibres naturelles ou sur la nappe (30) composite en fibres naturelles.

3. Procédé suivant l'une des revendications 1 ou 2, **caractérisé par** le stade suivant :
- dépôt de la couche (26) de protection en vernis sur la plaque (28) composite en fibres naturelles ou sur la nappe (30) composite en fibres naturelles par pulvérisation au moyen d'un applicateur (34) par pulvérisation.

4. Procédé suivant l'une des revendications 1 ou 2, **caractérisé par** le stade suivant :
- dépôt de la couche (26) de protection en vernis sur la plaque (28) composite en fibres naturelles ou sur la nappe (30) composite en fibres naturelles par transfert de couche au moyen d'un dispositif (56) de transfert de couche.

5. Procédé suivant l'une des revendications 1 à 4, **caractérisé par** le stade suivant :
- dépôt de la couche (26) de protection en vernis sur l'outil (40) supérieur et/ou sur l'outil (42) inférieur de l'outil (38) de formage avant de fermer l'outil (38) de formage pour le formage de la plaque (28) composite en fibres naturelles calibrée et chauffée ou de la nappe (30) composite en fibres naturelles calibrée et chauffée en le composant (10) d'habillage.

6. Procédé suivant l'une des revendications 1 à 5, **caractérisé par** le stade suivant :
- séchage de la plaque (28) composite en fibres naturelles ou de la nappe (30) composite en fibres naturelles au moyen d'un dispositif (54) de chauffage, après que la couche (26) de protection en vernis a été déposée.

7. Procédé suivant l'une des revendications 1 à 6, **caractérisé par** le stade suivant :
- injection d'éléments (34) fonctionnels sur le composant (10) d'habillage alors que l'outil (38) de formage est fermé.

8. Moyen de transport des personnes, en particulier, véhicule (15) comprenant un composant (10) d'habillage pour l'habillage d'un habitacle (12) du moyen (14) de transport des personnes, dans lequel le composant (10) d'habillage est fabriqué par un procédé suivant l'une des revendications 1 à 7.

9. Composant d'habillage fabriqué par un procédé suivant l'une des revendications 1 à 7,
**caractérisé en ce que** la couche (26) de protection en vernis est résistante aux UV, résistante à l'usure par frottement, hydrophobe et/ou résistante aux éraflures.

10. Composant d'habillage suivant la revendication 9, **caractérisé en ce que** l'élément (16) composite en fibres naturelles a une matrice (24) de liaison des fibres (22) naturelles en une matière thermoplastique, comme du polypropylène (PP), ou en une matière plastique thermodurcissable.

11. Composant d'habillage suivant l'une des revendications 9 à 10, **caractérisé en ce que** les fibres (22) naturelles sont en sisal, en chanvre, en jute, en lin et/ou analogue et sont fabriquées sous la forme d'un non tissé emmêlé aiguilleté ou non aiguilleté, d'un tissu ou d'une couche monodirectionnelle.
